# EUROPEAN PATENT APPLICATION

(11) **EP 3 301 778 A1**
(43) Date of publication of application: **04.04.2018**
(21) Application number: 16275143.2
(22) Date of filing: 30.09.2016
(51) Int. Cl.: H02J 7/00, G01R 27/20, G01R 31/02, G01R 31/04, A41D 1/00, G01N 17/02, A45F 3/06

(54) **ELECTRICAL POWER SUPPLY SYSTEM**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

An electrical power supply system comprising: an electrical connector (106); a signal transmitter (200) configured to send an electrical signal (500) to the electrical connector (106); measurement means configured to measure an electrical quantity at the electrical connector (106), the electrical quantity being dependent upon the electrical signal (500); and controlling means configured to control a transfer of electrical power to and/or from the electrical connector (106) based on a measured value of measurement of the electrical quantity. The electrical signal (500) may be an alternating current signal comprising two pulses (502, 504), which may have equal duration and equal and opposite amplitude.

## Description

### FIELD OF THE INVENTION

The present invention relates to electrical power supply system, for example, electrical power supply system implemented as part of wearable items.

### BACKGROUND

Soldiers typically wear body armour to protect themselves from enemy fire during combat. For example, the body armour may include a tactical vest which, in addition to protecting a wearer from enemy gunfire, also serves as a means for carrying combat gear. Such combat gear may include electrical devices such as radios, Global Positioning System (GPS) receivers, etc.

Many tactical vests include an integrated power supply, such as a rechargeable battery. Tactical vests may also include integrated electrical connectors coupled to the vest's power supply and distributed over the vest. In use, electrical devices may be attached to the connectors to receive power from the vest's power supply.

### SUMMARY OF THE INVENTION

The present inventors have realised that it would be beneficial to provide a system that reduces or eliminates the likelihood of corrosion to electrical connectors on garments, without a need for connector caps or covers.

An aspect of the present invention provides a "sense" contact on the connector. An electric pulse that may alternate between a positive and negative voltage is placed on the contact and the resistance between the "sense" connector contact and system ground is measured. User equipment connected to the connector may provide a fixed resistance between the "sense" pin and system ground. The measured resistance is then used by processing means to determine if a legitimate connection has been made, i.e. if permitted user equipment has been connected to the connector. A category of the user equipment may be determined from the measured resistance value.

In a first aspect, the present invention provides an electrical power supply system comprising: an electrical connector; a signal transmitter configured to send an electrical signal to the electrical connector; measurement means configured to measure an electrical quantity at the electrical connector, the electrical quantity being dependent upon the electrical signal; and controlling means configured to control a transfer of electrical power to and/or from the electrical connector based on a measured value of measurement of the electrical quantity.

The electrical signal may be an alternating current signal. The electrical signal may comprise two pulses. The two pulses may have equal duration. The two pulses may have equal and opposite amplitude. The electrical signal may be sent to the electrical connector periodically.

The controlling means may comprise a comparison module configured to compare the measured value of the electrical quantity to a predetermined value or predetermined range of values. The comparison module may be a hardware component such as a window comparator. The controlling means may comprise a power shut-off module configured to switch off electrical power to the electrical connector in response to the comparison module determining that the measured value of the electrical quantity is not equal to the predetermined value or is not within the predetermined range of values. The power shut-off module may be a hardware component.

The controlling means may comprise one or more processors configured to compare the measurement of the electrical quantity to the electrical signal or an initial signal used to generate the electrical signal, and control the transfer of electrical power to and/or from the electrical connector based on the comparison. The controlling means may comprise one or more processors configured to, based on the measurement of the electrical quantity, determine a category of an electrical device connected to the electrical connector, and control the transfer of electrical power to and/or from the electrical connector based on the determined category.

The electrical power supply system may further comprising one or more processors configured to, based on the measurement of the electrical quantity, determine that an electrical device is connected to the electrical connector, and, responsive to determining that an electrical device is connected to the electrical connector, control the signal transmitter to send a further electrical signal (which may be a substantially steady state electrical signal) to the electrical connector.

The electrical power supply system may further comprise: a further electrical connector; a further signal transmitter configured to send a further electrical signal to the further electrical connector; and further measurement means configured to measure an electrical quantity at the electrical connector, the electrical quantity measured at the further connector being dependent upon the further electrical signal. The controlling means is further configured to control a transfer of electrical power to and/or from the further electrical connector based on the measurement of the electrical quantity measured at the further connector. The signal transmitter and the further signal transmitter are configured to transmit the electrical signal and the further electrical signal in series.

The electrical quantity may be an electrical quantity selected from the group of electrical quantities consisting of: voltage, electric current, electrical resistance, electrical conductance, electrical reactance, electrical susceptance, magnetic flux, electrical charge, magnetic field, electric field, electrical power, electrical power spectrum, inductance, capacitance, electrical impedance, electrical admittance, phase between current and voltage, power factor, electrical spectral density, electrical phase noise, electrical amplitude noise, transconductance, transimpedance, electrical power gain, voltage gain, current gain, and frequency.

In a further aspect, the present invention provides a user wearable item comprising an electrical power supply system, the electrical power system being in accordance with any of the preceding aspects. The user wearable item may comprise a vest wearable on a torso of the user.

In a further aspect, the present invention provides a power supply control method for controlling a transfer of electrical power to and/or from an electrical connector. The method comprises: sending, by a signal transmitter, an electrical signal to the electrical connector; measuring, by measurement means, an electrical quantity at the electrical connector, the electrical quantity being dependent upon the electrical signal; and controlling, by controlling means, a transfer of electrical power to and/or from the electrical connector based on a measured value of the electrical quantity.

In a further aspect, the present invention provides a program or plurality of programs arranged such that when executed by a computer system or one or more processors it/they cause the computer system or the one or more processors to: send an electrical signal to the electrical connector; receive a measurement of an electrical quantity at the electrical connector, the electrical quantity being dependent upon the electrical signal; and control a transfer of electrical power to and/or from the electrical connector based on a measured value of the electrical quantity.

In a further aspect, the present invention provides a machine readable storage medium storing the program the plurality of programs according to the preceding aspect.

### BRIEF DESCRIPTION OF THE DRAWINGS

Figure 1 is a schematic illustration (not to scale) of a tactical vest;
Figure 2 is a schematic illustration (not to scale) showing certain components of the tactical vest;
Figure 3 is a process flow chart showing certain steps of a method performed using a power and data manager of the tactical vest;
Figure 4 is a schematic illustration (not to scale) showing control signals; and
Figure 5 is a schematic illustration (not to scale) showing a further signal.

### DETAILED DESCRIPTION

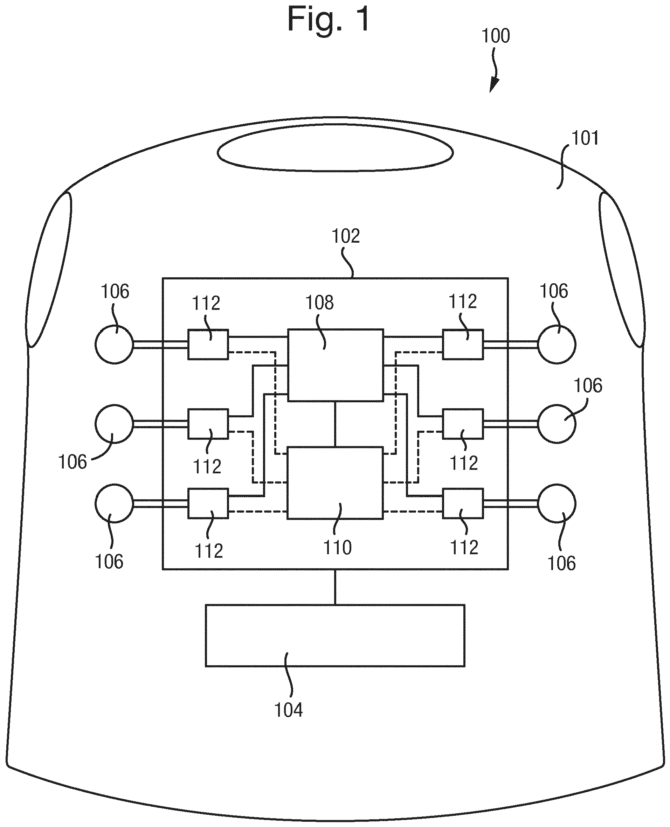

Figure 1 is a schematic illustration (not to scale) of a tactical vest 100 configured for military and/or commercial applications.

In this embodiment, the vest 100 comprises a body garment 101, a power and data manager hereinafter referred to as the "management module" 102, a power source 104, and a plurality of electrical connectors 106.

The body garment 101 is configured to be worn by a user, on the user's torso. The body garment comprises arm holes and a head hole through which the user places his or her arms and head respectively. In some embodiments, the body garment 101 is an item of personal armour configured to at least partially absorb impact energy and reduce or stop penetration of the user's body from, for example, firearm-fired projectiles, shrapnel, and the like. In this embodiment, the body garment 101 is made of fabric, and may optionally include panels of ballistic plate. In some embodiments, the body garment 101 is made of a waterproof material.

In this embodiment, the management module 102 is located in a sealable pocket in the body garment 101, for example, at the back of the body garment 101. The pocket in which the management module 102 is located may be waterproof. In this embodiment, the management module 102 comprises a processor 108, an analogue-to-digital converter (ADC) 110, and a plurality of signal generation and measurement modules, (hereinafter referred to as "intermediate modules" and indicated by the reference numerals 112).

The processor 108 is coupled to the ADC 110 such that electronic signals may be sent between the processor 108 and the ADC 110.

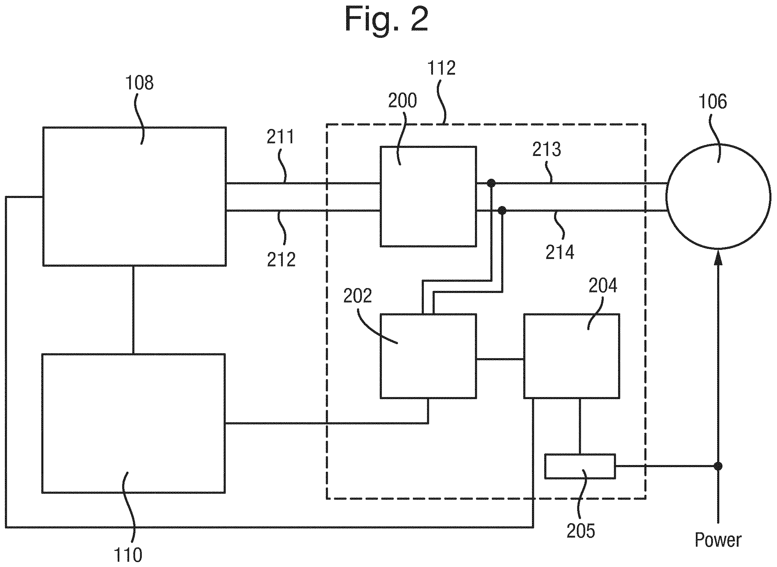

The processor 108 is coupled to each of the intermediate modules 112 such that electronic signals may be sent between the processor 108 and each of the intermediate modules 112. In this embodiment, as described in more detail later below with reference to Figure 2, the processor 108 is coupled to each of the intermediate modules 112 via a respective pair of electrical connections, although for ease of depiction, only one such connection is shown in Figure 1.

The ADC 110 is coupled to each of the intermediate modules 112 such that electronic signals may be sent between the ADC 110 and each of the intermediate modules 112.

The intermediate modules 112 will be described in more detail later below with reference to Figure 2. In this embodiment, each of the intermediate modules 112 is coupled, via two electrical connections, to a respective one of the plurality of connectors 106. Each intermediate module 112 is coupled to a respective connector 106 such that electronic signals may be sent between that intermediate module 112 and that connector 106.

In this embodiment, the power supply 104 is a rechargeable battery. The power supply 104 is coupled to the management module 102 such that the power supply 104 may supply electrical power to the management module 102 and vice versa. The power supply 104 is located in a sealable pocket in the body garment 101, for example, at the back of the body garment 101. The pocket in which the power supply 104 is located may be waterproof. The management module 102 is configured to selectively supply electrical power received from the power supply 104 to each of the connectors 106. The management module 102 controls the supply of electrical power from the power supply 104 to the connectors 106. Also, the management module 102 is configured to selectively supply electrical power received from one or more of the connectors 106 to the power supply 104. The management module 102 controls the supply of electrical power from one or more of the connectors 106 to the power supply 104. In some embodiments, the management module 102 controls the supply of electrical power from one or more of the connectors 106 to one or more different connectors. For ease of depiction, the power paths between the management module 102 and the connectors 106 via which electrical power from the power supply 104 is supplied to the connectors 106 are not shown in Figure 1.

In this embodiment, the connectors 106 are male electrical connectors (i.e. plugs). Each connector 106 comprises a plurality of connection pins including at least one Late-Mate-Early-Break (LMEB) connection pin.

In this embodiment, the connectors 106 are configured to receive electronic devices, hereinafter referred to as "peripheral devices". One or more peripheral devices may be attached to one or more of the connectors 106, for example, each connector 106 may connect to a respective peripheral device. The peripheral devices may comprise sockets to allow the peripheral devices to be attached to the connectors 106.

Examples of peripheral devices include, but are not limited to, mobile telephones, computing devices such as tablet computers, torches, or and supplementary power sources such as further rechargeable batteries or solar panels.

In this embodiment, when a connector 106 is not connected to a peripheral device, that connector 106 is open to the environment and tends to be prone to corrosion and/or contamination. For example, an exposed connector 106 may be subject to galvanic corrosion, for example, if seawater or similar substance is present at the connector. In some embodiments, the vest 100 includes removable covers for the connectors 106 to cover connectors 106 not connected to peripheral devices.

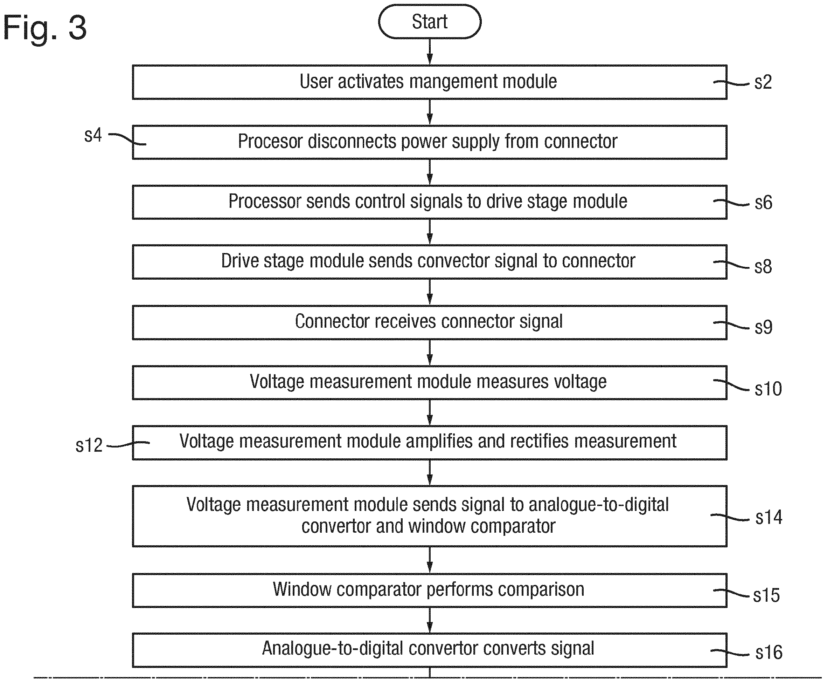

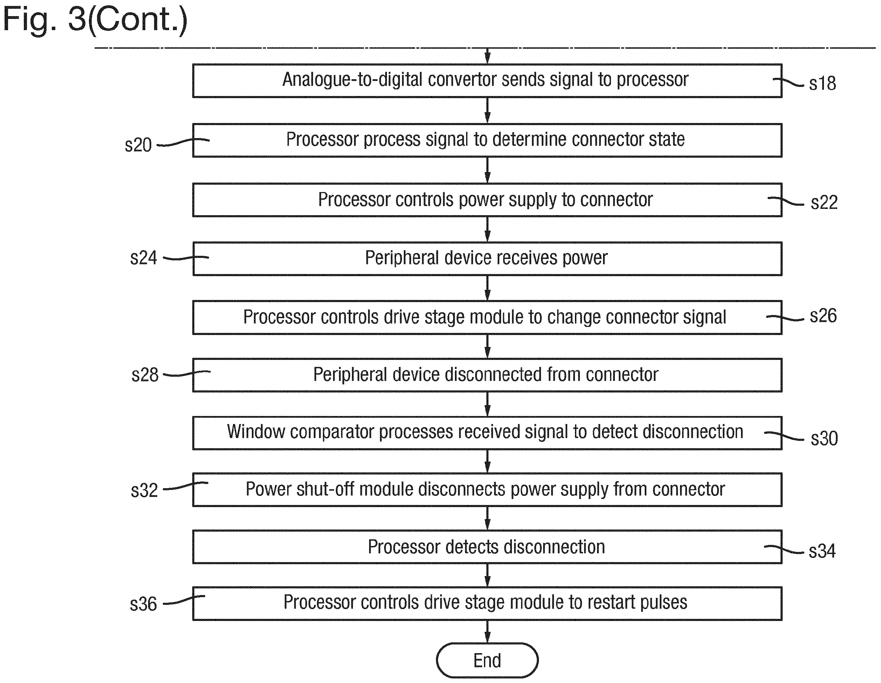

In this embodiment, vest 100 can supply suitable power for powering and/or charging peripheral devices connected to one or more of the connectors 106. The vest 100 can supply, for example, 7-36V in various embodiments. In this embodiment, as described in more detail later below with reference to Figure 3, the management module 102 is operable to control the supply of electrical power from the power supply 104 to peripheral devices attached to one or more of the connectors 106. In some embodiments, the management module 102 may regulate the electrical power supply to a connector 106 according to, for example, power requirements of an attached peripheral device and/or the type of connector 106. Also, in this embodiment, the management module 102 is operable to control the supply of electrical power from a peripheral device acting as an external power source attached to one or more of the connectors 106 to the power supply 104 and/or a further peripheral device attached to a different one or more of the connectors 106. The power supply 104 may store electrical power received from a peripheral device acting as an external power source attached to one or more of the connectors 106.

Figure 2 is a schematic illustration (not to scale) showing further details of the processor 108, the ADC 110, an intermediate module 112 and a corresponding connector 106. For clarity and ease of depicting, only a single intermediate module 112 and connector 106 pair is shown in Figure 2, however in this embodiment, the vest comprises a plurality of such intermediate module 112 and connector 106 pairs.

In this embodiment, the intermediate module 112 comprises a drive stage module 200, a voltage measurement module 202, a window comparator 204, and a power shut-off module 205.

The processor 108 is connected to the drive stage module 200 via two electrical connections, hereinafter referred to as the first connection 211 and the second connection 212, such that electrical signals may be sent between the processor 108 and the drive stage module 200 via the first and/or second connections 211, 212.

The drive stage module 200 is configured to generate electrical pulses based on signals received from the processor 108. The drive stage module 200 is connected to the connector 106 via two electrical connections, hereinafter referred to as the third connection 213 and the fourth connection 214. In this embodiment, electrical signals may be sent between the drive stage module 200 and the connector 106 via the third connection 213. In this embodiment, the fourth connection 214 is a ground connection.

In this embodiment, the third connection 213 is connected to the LMEB connection pin of the connector 106.

The voltage measurement module 202 is configured to measure a voltage across the connector 106. In this embodiment, the voltage measurement module 202 is connected to third connection 213 and the fourth 214 and is configured to measure a potential difference between these two connections 213, 214. In this embodiment, the voltage measurement module 202 comprises one or more amplifiers and one or more rectifiers for processing the measured voltage across the connector 106. A first output of the voltage measurement module 202 is connected to the window comparator 204 such that an output of the voltage measurement module 202 may be sent to the window comparator 204. A second output of the voltage measurement module 202 is connected to the ADC 110 such that an output of the voltage measurement module 202 may be sent to the ADC 110.

The window comparator 204 is configured to determine whether a received input voltage is within a preselected range. A first output of the window comparator 204 is connected to the processor 108 such that an output of the window comparator 204 may be sent to the processor 108. A second output of the window comparator 204 is connected to the power shut-off module 205 such that the power shut-off module 205 may receive, from the window comparator 204, a signal indicating that the window comparator 204 has determined that its received input voltage is outside the preselected range.

The power shut-off module 205 is further coupled to the power supply to the connector 106 such that the power shut-off module 205 may rapidly disconnect the power supply from the connector 106 in the event that the window comparator 204 determines that its received input voltage is outside the preselected range, as described in more detail later below with reference to Figure 3.

Apparatus, including the processor 108, for implementing the above arrangement, and performing the method steps to be described later below, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

Figure 3 is a process flow chart showing certain steps of a method implemented using the management module 102 installed in the vest 100. In this embodiment, the vest 100 is worn by a user on the user's torso.

The process of Figure 3 describes control of power to the single connector 106 shown in Figure 2. However, it will be appreciated that in practice power supply to multiple connectors 106 may be simultaneously controlled using this method.

It should be noted that certain of the process steps depicted in the flowchart of Figure 3 and described below may be omitted or such process steps may be performed in differing order to that presented above and shown in Figure 3. Furthermore, although all the process steps have, for convenience and ease of understanding, been depicted as discrete temporally-sequential steps, nevertheless some of the process steps may in fact be performed simultaneously or at least overlapping to some extent temporally. Furthermore, the process steps may be performed continuously.

At step s2, the user turns on, i.e. activates, the management module 102, for example using a switch on the vest 100. The management module 102 may draw power from the power supply 104.

At step s4, the processor 108 disconnects the power supply 104 from the connector 106 such that electrical power is not supplied by the power supply 104 to the connector 106 or vice versa. The processor 108 may perform this disconnection by, for example, acting on the power supply 104, the connector 106, and/or an electrical connection between the power supply 104 and the connector 106.

At step s6, the processor 108 sends control signals to the drive stage module 200 via the first and second connections 211, 212.

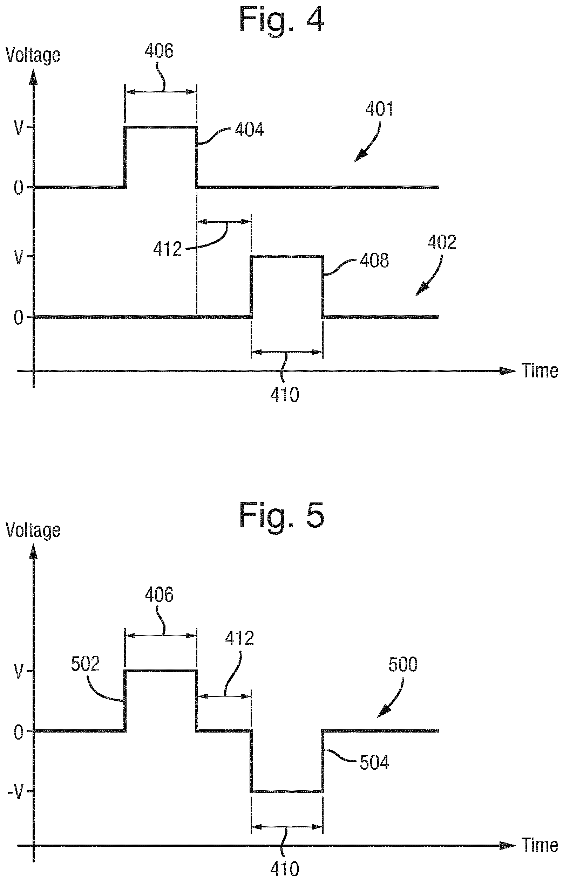

Figure 4 is a schematic illustration (not to scale) showing control signals 401, 402 sent from the processor 108 to the drive stage module 200 at step s6. The x-axis of the graph of Figure 4 upon which the control signals 401, 402 are shown represents a time dimension. The y-axis of the graph of Figure 4 upon which the control signals 401, 402 are shown represents a voltage.

In this embodiment, a first control signal 401 is sent from the processor 108 to the drive stage module 200 via the first connection 211. Also, a second control signal 402 is sent from the processor 108 to the drive stage module 200 via the second connection 212.

The first control signal 401 comprises a first pulse 404 having a first duration 406. The second control signal 402 comprises a second pulse 408 having a second duration 410. In this embodiment, the first duration 406 is equal to the second duration 410. In this embodiment, the first and second durations are 1ms.

In this embodiment, the first pulse 404 has a predetermined voltage V. Also, the second pulse 408 has a predetermined voltage V, i.e. the voltages of the first and second pulses 404, 408 are equal. In this embodiment, the predetermined voltage is low, for example 3.3V.

In this embodiment, the first pulse 404 and the second pulse 408 are spaced apart in time, with the second pulse 408 being transmitted by the processor 108 after the first pulse 404. The spacing duration between the first pulse 404 and the second pulse 408 is indicated in Figure 4 by the reference numeral 412. In this embodiment, the spacing duration 412 is 2ms.

In this embodiment, the processor 108 sends the control signals 401, 402 on respective connections 211, 212 to the drive stage module 200 periodically. The periodicity with which the processor 108 transmits the control signals is, in this embodiment, 100ms, i.e. the first and second pulses 404, 408 are repeated at 100ms intervals.

Returning to the description of Figure 3, at step s8, the drive stage module 200 receives the control signals 401, 402 and generates a further signal, hereinafter referred to as the "connector signal", based on the received control signals 401, 402. The drive stage module 200 sends the connector signal to the connector 106 via the third connection 213.

Figure 5 is a schematic illustration (not to scale) showing the connector signal 500. The x-axis of the graph of Figure 5 upon which the connector signal 500 is shown represents a time dimension. The y-axis of the graph of Figure 5 upon which the connector signal 500 is shown represents voltage.

The connector signal 500 comprises a positive pulse 502 which is based on, or defined by, the first pulse 404 of the first control signal 401. The positive pulse 502 of the connector signal 500 has a duration equal to the duration of the first pulse 404, i.e. the first duration 406, which in this embodiment is 1 ms. The positive pulse 502 of the connector signal 500 has a voltage based on that of the first pulse 404. In this embodiment, the voltage of the positive pulse 502 is +V, for example, 3.3V.

The connector signal 500 further comprises a negative pulse 504 which is based on, or defined by, the second pulse 408 of the second control signal 402. The negative pulse 504 of the connector signal 500 has a duration equal to the duration of the second pulse 408, i.e. the second duration 410, which in this embodiment is 1ms. The negative pulse 504 of the connector signal 500 has a voltage based on that of the second pulse 408. In this embodiment, the voltage of the negative pulse 504 is -V, for example -3.3V.

Thus, in this embodiment, the positive pulse 502 and the negative pulse 504 of the connector signal 500 are equal and opposite to each other, both in terms of voltage and duration. Advantageously, the pulses 502, 504 of the connector signal 500 being substantially equal and opposite tends to reduce or eliminate the risk of galvanic corrosion of the connector 106 caused by the application of the connector signal 500 to the connector 106, for example, in the event that the connector 106 is exposed to an environment such as a saltwater environment.

The positive pulse 502 and the negative pulse 504 of the connector signal 500 are spaced apart in time, with the negative pulse 504 occurring in the connector signal 500 after the positive pulse 502. The spacing duration between the positive and negative pulses 502, 504 is defined by (and in this embodiment is equal to) the spacing duration 412 between the first pulse 404 and the second pulse 408. Thus, in this embodiment the positive and negative pulses 502, 504 are spaced apart in timing by the spacing duration 412 equal to 2ms.

In this embodiment, as the control signals 401, 402 that drive the drive stage module 200 are periodic, the drive stage module 200 sends the connector signal 500, via the third connection 403, to the connector 106 periodically. The periodicity with which the drive stage module 200 transmits the connector signal 500 is, in this embodiment, 100ms, i.e. the positive and negative pulses 502, 504 are repeated at 100ms intervals.

At step s9, the connector 106 receives the connector signal 500.

In this embodiment, the third connection 213 and the fourth connection 214 are connected to different respective connection pins of the connector 106.

At step s10, the voltage measurement module 202 measures a voltage between the third connection 213 and the fourth connection 214. The voltage measurement module 202 measures a voltage waveform across the connector 106 produced by applying the connector signal 500 to the third connection 213.

The voltage measured by the voltage measurement module 202 is dependent upon a state of the connector 106, i.e. whether or not a peripheral device is connected to the connector or not, and/or whether or a contamination substance (e.g., water such as saltwater, or mud) is present over the connector 106.

If a peripheral device is connected to the connector 106, the connection pins of the connector 106 connected to the third and fourth connections 213, 214 are electrically connected by the peripheral device. The connected peripheral device, in effect, provides a resistance between the third and fourth connections 213, 214, thereby allowing current flow. This electrical connection between the third and fourth connections 213, 214 reduces the amplitude of the applied signal to a known or expected value, e.g. from 3.3V to an expected lower value. In some embodiments, this lower voltage value measured by the voltage measurement module 202 is used to determine the type of peripheral device that is connected to the connector 106.

If a peripheral device is not connected to the connector 106 and there is not a contaminating electrically conductive substance across the connection pins of the connector 106, the third and fourth connections 213, 214 are electrically isolated. This electrical isolation between the third and fourth connections 213, 214 causes the waveform measured by the voltage measurement module 202 to be substantially the same as that of the connector signal 500.

However, if a peripheral device is not connected to the connector 106 and there is a contaminating electrically conductive substance across the connection pins of the connector 106, the connection pins of the connector 106 to which the third and fourth connections 213, 214 are electrically connected, at least to some degree, by the contaminating substance. The contaminating substance, in effect, provides a resistance between the third and fourth connections 213, 214, thereby allowing current flow. This electrical connection between the third and fourth connections 213, 214 tends to affect the waveform measured by the voltage measurement module 202, and may cause that waveform to have a shape that is different from that of the connector signal 500. This electrical connection between the third and fourth connections 213, 214 formed by the contaminant may reduce the amplitude of the applied signal to an unknown or unexpected value.

Advantageously, the relatively large periodicity of the connector signal 500 compared to the pulse duration tends to reduce the time a voltage is applied to the connector 106. This tends to reduce galvanic corrosion.

At step s12, the voltage measurement module 202 amplifies and rectifies the measured voltage between the third and fourth connections 213, 214.

At step s14, the voltage measurement module 202 sends an electrical signal corresponding to the amplified and rectified voltage measurement to the ADC 110 and the window comparator 204.

At step s15, the window comparator 204 compares the received voltage measurement to a predetermined voltage value or range of values. In this embodiment, the predetermined voltage value or range of values is equal to a known voltage value or range of values corresponding to one or more permitted peripheral devices. In other words, the predetermined voltage value or range of values to which the window comparator 204 compares the measured voltage is equal to a voltage value or range of values associated with the allowable peripheral devices.

To illustrate operation of the management module 102, in this embodiment it is assumed that at step s15, an allowable peripheral device is connected to the connector 106. Thus, the window comparator 204 determines that its input is within the predetermined range of voltage values. In this embodiment, responsive to determining that the measured voltage is equal to the predetermined voltage value or is within the predetermined range of values, the window comparator 204 outputs a result of the comparison to the processor 108. Furthermore, at this step, the window comparator 204 does not send a message to the power shut-off module 205 and thus electrical power supply to the connector 106 is maintained.

However, if the window comparator 204 was to determine that the calculated voltage value is not equal to the predetermined voltage value or is outside the range of values, the window comparator 204 would act as described in more detail later below with reference to steps s30 and s32, i.e. the window comparator 204 and power shut-off module 205 would act so as to disconnect a power supply to the connector 106. Thus, the window comparator 204 and the power shut-off module 205 are configured to shut off a power supply to the connector 106 in response to determining that the voltage across that connector 106 is not a permitted value or within a permitted range, and thus that an allowable peripheral device is not connected to the connector 106.

In some embodiments, at step s15, the window comparator 204 compares the measured voltage to multiple predetermined values or ranges of values. Each of the multiple predetermined values or ranges of values may correspond to a different type of known peripheral device that is permitted to be connected to the connector 106. Thus, advantageously, the window comparator 204 may be configured to test for multiple different allowable peripheral devices being connected to the connector 106.

At step s16, the ADC 110 converts the signal received from the voltage measurement module 202 to be a digital signal.

At step s18, the ADC 110 sends the generated digital signal to the processor 108.

At step s20, based on the received processed voltage measurement, the processor 108 determines a state of the connector 106. The state of the connector 106 may be determined over a plurality of samples.

In some embodiments, an output of the window comparator 204 may also be used by the processor 108 to determine a state of the connector 106.

For example, if the window comparator 204 determines that the voltage across that connector 106 is not a permitted value or within a permitted range, the processor 108 may determine that an allowable peripheral device is not connected to the connector 106. The processor 108 may then operate as described in more detail later below with reference to steps s34 to s36.

Also for example, if the window comparator 204 determines that the voltage across that connector 106 is a permitted value or within a permitted range, the processor 108 may determine that either an allowable peripheral device is connected to the connector 106, or there is contamination across the connector 106 causing an allowable voltage to be measured.

In this embodiment, to differentiate between an allowable peripheral device being connected to the connector 106 and contamination across the connector 106 causing an allowable voltage to be measured, the processor 108 monitors the output from the ADC 110 (i.e. the converted processed voltage measurement). The processor 108 determines whether or not the output from the ADC 110 deviates significantly from an expected (or threshold) waveform profile. In some embodiments, the expected waveform profile is based on, for example substantially the same as, that of the first control signal 401.

As an example method of performing this differentiation, the processor 108 samples multiple points of the ADC output waveform. This sampling may be performed over multiple repetitions of the connector signal 500. The processor 108 then determines, for each sampled point, a deviation value indicative of a distance of that point from the expected waveform. The processor then determines the number of deviation values that exceed a threshold deviation value. This threshold deviation value may be any appropriate value selected, e.g. by a user, to represent a "significant deviation" from the expected waveform. The processor 108 then determines whether or not the number of deviation values that exceed the threshold deviation value is above a further threshold value. This further threshold value may be any appropriate value selected, e.g. by a user. In response to determining that the number of deviation values exceeding the threshold deviation value is not above the further threshold value, the processor 108 determines that an allowable peripheral device is connected to the connector 106. Alternatively, in response to determining that the number of deviation values exceeding the threshold deviation value is above the further threshold value, the processor 108 determines that contamination is present across the connector 106 causing an allowable voltage or resistance to be measured.

This monitoring of the ADC output may be performed by the processor 108 responsive to the processor 108 generating the first control signal 401, which defines the positive pulse 502 in the connector signal.

As discussed above, to illustrate operation of the management module 102, in this embodiment it is assumed that an allowable peripheral device is connected to the connector 106. Thus, in this embodiment, the processor 108 determines that the output from the ADC 110 does not deviate significantly from the expected waveform.

At step s22, responsive to determining that an allowable peripheral device is connected to the connector 106, the processor 108 controls the power supply 104, the connector 106, and/or the electrical connections therebetween, such that the power supply 104 provides electrical power to the connector 106.

In this embodiment, the processor 104 processes the output of the ADC 110 to determine a type or category of the peripheral device connected to the connector 106. In some embodiments, the processor 108 then operates such that the power supply 104 provides, to the connector 106, an amount of electrical power suitable for the detected type of the peripheral device.

For example, the processor 108 determines a value of a resistance across the connection pins of the connector 106 and determines a type of peripheral device connected to the connector 106 based on the resistance value. The processor 108 may then connect together the power supply 104 and the connector 106, thus allowing the peripheral device connected to the connector 106 to draw the power it needs from the power supply 104. In some embodiments, the processor 108 controls the power supply 104, the connector 106, and/or the electrical connections therebetween such that the power supply 104 provides, to the connector 106, an amount of electrical power dependent on the output of the ADC 110.

To illustrate operation of the management module 102, in this embodiment it is assumed that the peripheral device connected to the connector 106 is a power sink. However, in some embodiments, the processor 108 may detect that a power source is connected to the connector 106, for example, the peripheral device may be solar panel. The processor 108 may then connect the peripheral power source to the common rail such that power is supplied to the common rail by the peripheral power source connected at the connector 106.

At step s24, the peripheral device connected to the connector 106 receives power from the power supply 104. The user may use the powered peripheral device.

At step s26, the processor 108 controls the drive stage module 200 to stop sending the periodic connector signals 500 to the connector 106. In this embodiment, the processor 108 sets the first control signal 401 to a constant high level, e.g. a level corresponding to 3.3V. The second control signal 402 may be stopped. Thus pulses 502, 504 are changed accordingly.

Thus, once an allowed peripheral device is detected at the connector 106, the control signals 401, 402 and connector signals 500 are switched to a steady state, for example, a constant 3.3V signal. This advantageously tends to facilitate the detection of a peripheral device being rapidly disconnected from the connector 106.

At step s28, at some later time, the peripheral device is rapidly disconnected from the connector 106. For example, the user may purposefully disconnect the peripheral device, or the peripheral device may accidentally become disconnected.

Disconnection of the peripheral device changes voltage between the third and fourth connections 213, 214 measured by the voltage measurement module 202. Thus, a waveform of the output signal from the voltage measurement device 202 is changed. In particular, in this embodiment, the rapid disconnection of the peripheral device from the connector causes the steady state voltage at the connector 106 to jumps to a high level.

In this embodiment, when the peripheral device is disconnected from the connector 106, the LMEB connection pin of the connector disconnects from the peripheral device first. This LMEB connection pin is coupled to the third connection 213 along which the connector signal 500 is received. This advantageously tends to provide very rapid changing of the waveform of the output signal from the voltage measurement device 202 in response to disconnection of the peripheral device, thereby improving system responsiveness.

At step s30, the window comparator 204 compares the voltage measured at the connector 106 to the predetermined voltage value or range of values.

In this embodiment, to illustrate operation of the management module 102, at step s30 the peripheral device is disconnected from the connector 106. This disconnection of the peripheral device causes the measured voltage value to be not equal to the predetermined voltage value or outside the range of values, which is detected by the window comparator 204.

At step s32, responsive to determining that the measured voltage is not equal to the predetermined voltage value or is not within the predetermined range of values, the window comparator 204 sends a signal indicative of this comparison to the power shut-off module 205. Responsive to receiving that signal from the window comparator 204, the power shut-off module 205 disconnects the power supply 104 from the connector 106.

Advantageously, this shutting off of the power supply to the connector 106 tends to reduce or eliminate a risk of galvanic corrosion at the exposed connector 106.

Also, this shutting off of the power supply to the connector 106 by the power shut-off module 205 tends to be fast compared to, for example, control of the power supply to the connector 106 by the processor 108 running software. Thus, power tends to be conserved and a risk of galvanic corrosion at the connector 106 tends to be reduced.

At step s34, the processor 108 detects, for example from an output of the window comparator 204, that electrical power to the connector 106 has been shut-off.

At step s36, responsive to detecting shut-off of the connector 106, the processor 108 controls the drive stage module 200 to restart sending the periodic connector signals 500 to the connector 106. In this embodiment, the processor 108 restarts sending the control signals 401, 402 to the drive stage module 200 which causes the drive stage module 200 to restart transmission of the pulses 502, 504. Thus, in this embodiment, the method may proceed back to step s6, described earlier above.

Thus, once a peripheral device is disconnected at the connector 106, transmission of control signals 401, 402 and connector signals 500 is restarted thereby allowing the management module 102 to detect a subsequent reconnection of a peripheral device.

Thus, a method implemented using the vest is provided.

The use of an alternating signal for the connector signal advantageously tends to reduces galvanic corrosion on the connector pins that may otherwise corrode the contacts to a point of failure within an unacceptably short period of time.

Advantageously, the predetermined voltage values implemented by the window comparator and/or the processor in determining whether or not an allowable peripheral device is connected to the connector are specified to be outside the voltage values that would be measured if the connector was in contact with a contaminant, for example, submersed in fresh water or saltwater.

In some situations, contamination on the connector can introduce a "false" voltage reading that is inside a valid voltage or resistance range. Advantageously the processor tends to be able to differentiate such a "false" reading from a valid reading by detecting changes in the connector signal waveform.

In some embodiments, responsive to the detection of an invalid voltage or resistance at a connector, the user is alerted as to presence of contamination on the connector through a suitable human machine interface. For example, an alarm may be sounded, or warning flag may be display on a user equipment coupled to the vest.

Advantageously, use of connector caps for the connectors tends to be avoided. Advantageously, an unpowered connector without a connector cap tends to present less of a short circuit/spark risk than a powered open connector.

In the above described apparatus and method, advantageously connectors are not energised until a permitted piece of equipment is attached to that connector. This tends to reduce or eliminate galvanic corrosion of that connector.

The above described system and method tends to provide for the reliable detection of the connection of a piece of equipment without applying a constant voltage to any of the connector contacts.

Advantageously, power supply to/from multiple different connectors can be managed at the same time. Preferably, if the power supply to/from multiple different connectors is being managed, respective connector signals are sent to the different connectors in series as opposed to simultaneously. This advantageously tends to facilitate processing of measured signals by the processor, thereby tending to reduce processor power requirement, complexity and weight. Nevertheless, in some embodiments connector signals may be transmitted to the connectors at the same time and/or voltage or resistance measurements may be processed at the same time.

The rapid detection of a currently used power source allows the management module 102 to switch to another power source before the power is lost from the currently used one. This means if a currently used power source is accidentally disconnected from the system, system power is not lost providing the system has another power source connected.

In the above embodiments, the management module and connectors are implemented on a tactical vest. However, in other embodiments, the management module and connectors are implemented on a different item, for example a different wearable item such as trousers, a bodysuit, a helmet, or a backpack. In some embodiments, the components of the system are distributed across multiple different items.

In the above embodiments, the processor controls the drive stage modules using two respective control signals. However, in other embodiments the processor controls the drive stage modules in a different way, for example using a single control signal for one or more of the drive stage modules. In some embodiments, the processor generates and sends connector signals directly to the connectors.

In the above embodiments, the voltage measurement module measures a voltage between the third and fourth connections. However, in other embodiments, instead of or in addition to the voltage across the connector, one or more different measurable electrical quantities (i.e. electrical values, parameters or phenomena) associated with the connector are measured. The measurable electrical quantities may characterise or indicate the behaviour or a state of the connector.

In the above embodiments, the window comparator determines whether or not an allowable peripheral device is connected to the connector based on the voltage measurements across the connector. In particular, the window comparator compares the measured voltage to a predetermined value or range of values. However, in other embodiments, to determine whether or not an allowable peripheral device is connected to the connector, the window comparator or a different hardware device compares one or more different measurable electrical quantities (i.e. electrical values, parameters or phenomena) associated with the connector to respective predetermined values, instead of or in addition to voltage measurements.

In the above embodiments, the processor determines a state of the connector based on the voltage measurements across the connector. However, in other embodiments, the processor determines a state of the connector based on one or more different measurable electrical quantities (i.e. electrical values, parameters or phenomena) associated with the connector instead of or in addition to the voltage measurements.

In the above embodiments, the processor determines the type of peripheral device connected to the connector based on the voltage measurements across the connector. In particular, the processor determines a resistance across the connector determines a type of peripheral device based on that resistance value. However, in other embodiments, the processor determines the type of peripheral device connected to the connector based on one or more different measurable electrical quantities (i.e. electrical values, parameters or phenomena) associated with the connector instead of or in addition to the voltage measurements.

Examples of electrical quantities that may be measured and used by the window comparator and/or the processor include, but are not limited, to: voltage, electric current, electrical resistance, electrical conductance, electrical reactance, electrical susceptance, magnetic flux, electrical charge, magnetic field, electric field, electrical power, electrical power spectrum, inductance, capacitance, electrical impedance, electrical admittance, phase between current and voltage, power factor, electrical spectral density, electrical phase noise, electrical amplitude noise, transconductance, transimpedance, electrical power gain, voltage gain, current gain, and frequency. Any appropriate electrical methods, devices and calculations may be used to measure an electrical quantity.

In the above embodiments, the connectors are male connectors comprising at least one LMEB connection pin. However, in other embodiments one or more of the connectors is a female connector (i.e. a jack). In some embodiments, one or more connectors does not include a LMEB connection pin.

## Claims

1. An electrical power supply system comprising:
an electrical connector (106);
a signal transmitter (200) configured to send an electrical signal (500) to the electrical connector (106);
measurement means configured to measure an electrical quantity at the electrical connector (106), the electrical quantity being dependent upon the electrical signal (500); and
controlling means configured to control a transfer of electrical power to and/or from the electrical connector (106) based on a measured value of measurement of the electrical quantity.

2. An electrical power supply system according to claim 1, wherein the electrical signal (500) is an alternating current signal.

3. An electrical power supply system according to claim 1 or 2, wherein:
the electrical signal (500) comprises two pulses (502, 504);
the two pulses (502, 504) have equal duration; and
the two pulses (502, 504) have equal and opposite amplitude.

4. An electrical power supply system according to any of claims 1 to 3, wherein the electrical signal (500) is sent to the electrical connector (106) periodically.

5. An electrical power supply system according to any of claims 1 to 4, wherein the controlling means comprises:
a comparison module (204) configured to compare the measured value of the electrical quantity to a predetermined value or predetermined range of values; and
a power shut-off module (205) configured to switch off electrical power to the electrical connector (106) in response to the comparison module (204) determining that the measured value of the electrical quantity is not equal to the predetermined value or is not within the predetermined range of values.

6. An electrical power supply system according to any of claims 1 to 5, wherein the controlling means comprises one or more processors (108) configured to:
compare the measurement of the electrical quantity to the electrical signal (500) or an initial signal used to generate the electrical signal (500); and
control the transfer of electrical power to and/or from the electrical connector (106) based on the comparison.

7. An electrical power supply system according to any of claims 1 to 6, wherein the controlling means comprises one or more processors (108) configured to:
based on the measurement of the electrical quantity, determine a category of an electrical device connected to the electrical connector (106); and
control the transfer of electrical power to and/or from the electrical connector (106) based on the determined category.

8. An electrical power supply system according to any of claims 1 to 7, further comprising one or more processors (108) configured to:
based on the measurement of the electrical quantity, determine that an electrical device is connected to the electrical connector (106); and
responsive to determining that an electrical device is connected to the electrical connector (106), control the signal transmitter (200) to send a substantially steady state electrical signal to the electrical connector (106).

9. An electrical power supply system according to any of claims 1 to 8, wherein:
the electrical power supply system further comprises:
a further electrical connector;
a further signal transmitter configured to send a further electrical signal to the further electrical connector; and
further measurement means configured to measure an electrical quantity at the further electrical connector, the electrical quantity measured at the further connector being dependent upon the further electrical signal;
the controlling means is further configured to control a transfer of electrical power to and/or from the further electrical connector based on the measurement of the electrical quantity measured at the further connector; and
the signal transmitter (200) and the further signal transmitter are configured to transmit the electrical signal (500) and the further electrical signal in series.

10. An electrical power supply system according to any of claims 1 to 9, wherein the electrical quantity is an electrical quantity selected from the group of electrical quantities consisting of: voltage, electric current, electrical resistance, electrical conductance, electrical reactance, electrical susceptance, magnetic flux, electrical charge, magnetic field, electric field, electrical power, electrical power spectrum, inductance, capacitance, electrical impedance, electrical admittance, phase between current and voltage, power factor, electrical spectral density, electrical phase noise, electrical amplitude noise, transconductance, transimpedance, electrical power gain, voltage gain, current gain, and frequency.

11. A user wearable item comprising an electrical power supply system, the electrical power system being in accordance with any of claims 1 to 10.

12. A user wearable item according to claim 11, wherein the user wearable item comprises a vest (101) wearable on a torso of the user.

13. A power supply control method for controlling a transfer of electrical power to and/or from an electrical connector (106), the method comprising:
sending, by a signal transmitter (200), an electrical signal (500) to the electrical connector (106);
measuring, by measurement means, an electrical quantity at the electrical connector (106), the electrical quantity being dependent upon the electrical signal (500); and
controlling, by controlling means, a transfer of electrical power to and/or from the electrical connector (106) based on a measured value of the electrical quantity.

14. A program or plurality of programs arranged such that when executed by a computer system or one or more processors (108) it/they cause the computer system or the one or more processors (108) to:
send an electrical signal (500) to the electrical connector (106);
receive a measurement of an electrical quantity at the electrical connector (106), the electrical quantity being dependent upon the electrical signal (500); and
control a transfer of electrical power to and/or from the electrical connector (106) based on a measured value of the electrical quantity.

15. A machine readable storage medium storing the program or the plurality of programs according to claim 14.
